# EUROPEAN PATENT APPLICATION

(11) **EP 1 364 977 A1**
(43) Date of publication of application: **26.11.2003**
(21) Application number: 02712278.7
(22) Date of filing: 05.02.2002
(51) Int. Cl.: C08F 285/00, C08L 51/06, C09D 151/06, C09D 5/02, C09J 151/06

(54) **AQUEOUS DISPERSION, PROCESS FOR PRODUCING THE SAME, AND USE THEREOF**

(30) Priority: 06.02.2001 JP 2001030143; 28.12.2001 JP 2001399274
(71) Applicant: NIPPON PAPER INDUSTRIES CO., LTD., Kita-ku, Tokyo 114-0002 (JP)
(72) Inventor: MITSUI, Hideaki, c/o Nippon Paper Ind. Co. Ltd, Iwakuni-shi, Yamaguchi 740-0003 (JP); KOYAMA, Kinichiro, c/o Nippon Paper Ind. Co. Ltd, Iwakuni-shi, Yamaguchi 740-0003 (JP); MURAMOTO, Hironori, c/o Nippon Paper Ind. Co. Ltd, Iwakuni-shi, Yamaguchi 740-0003 (JP); YOSHIOKA, Hidetoshi, c/o Nippon Paper Ind. Co. Ltd, Iwakuni-shi, Yamaguchi 740-0003 (JP)
(74) Representative: TER MEER STEINMEISTER & PARTNER GbR
(86) International application number: JP0200909
(87) International publication number: WO02062862

(57) **Abstract**

The invention provides an aqueous dispersion having excellent adherence and appearance of coated film and yet giving a coated film with good oil resistance for moldings or films of polyolefinic resin, as a resin for paint, ink or adhesive.

An aqueous dispersion characterized by containing a polymer obtainable by polymerizing particular hydroxyl group-containing acrylic monomer and polymerizable monomer with raw material aqueous dispersion dispersedly containing carboxyl group-containing chlorinated polyolefin resin with chlorine content of 15 to 35% by weight, in the presence of anionic surfactant.

## Description

### Technical field

The present invention relates to an aqueous dispersion, method of producing the same and uses that use the same. In more detail, it relates to an aqueous dispersion suitable for the uses for primer and paint to be used on painting polypropylenic resin moldings and further for binder resin on adhering polypropylenic resin products to other substrates.

### Background technologies

So far, olefinic resins such as polypropylene have high chemical stability and are low in price. In addition, for the reasons of excellent balance in physical properties, possible recycling, etc., the quantity of uses thereof has increased year by year, centering on automotive parts, household electrical appliances and moldings for household general merchandises. However, since olefinic resins contain no polar group in the molecular chain, they have drawbacks of hard painting and difficulties in adhesion etc.

For this reason, when painting or adhering polypropylenic resin, it is common to use a resin having chlorinated polypropylene as a main component for primer or one-coat. With chlorinated polypropylene, however, it is common to use aromatic organic solvents such as toluene and xylene, leading to problems in the aspects of safety and hygiene and environmental pollution.

In recent years, from these environmental problems, in the uses for paint and adhesive, aqueous conversion is being investigated vigorously. In particular, from the viewpoints of recycling of plastics etc., the necessity of paint that allows to be coated by one-coat onto polyolefin resin-based substrates without surface treatment has been raised. In this case, since the resin layer comes directly to the surface of coated film, not only the adherence, but also the oil resistance are required.

However, with conventional aqueous resin dispersions of chlorinated polypropylene alone (e.g. Japanese Patent Publication No. Hei 8-6009, Japanese Unexamined Patent Publication No. Hei 6-80738, etc.), the adherence to polypropylene is good, but, since chlorinated polypropylene itself is soluble into oil component, there is a problem in the oil resistance.

There, a method of polymerizing acrylic monomer onto chlorinated polyolefin is proposed. For example, in Japanese Unexamined Patent Publication No. Hei 5-209006, a method of dissolving chlorinated polyolefin resin into acrylic monomer, then forcedly dispersing this into water, and thereafter obtaining aqueous converted product is proposed. Moreover, in Japanese Unexamined Patent Publication No. Hei 7-26088, a method of polymerizing acrylic monomer and polymerizable surfactant onto chlorinated resin, then neutralizing this with amine, and conducting emulsification reaction in high-pressure emulsifier is proposed. Furthermore, in Japanese Unexamined Patent Publication No. Hei 9-316134, a method of adding acrylic monomer to aqueous dispersion of chlorinated polyolefin resin to swell chlorinated polyolefin resin, and then polymerizing said acrylic monomer is proposed.

However, in the method of Japanese Unexamined Patent Publication No. Hei 5-209006, it is difficult to disperse the solution of chlorinated polyolefin resin into water in the state of fine particles. In particular, since low chlorinated polyolefin resin with chlorine content of not more than 25% dissolves hardly into (meth)acrylic monomer, it is difficult to obtain aqueous converted product by said method. Moreover, in the method of Japanese Unexamined Patent Publication No. Hei 7-26088, since the emulsification reactions are conducted several times at 700kg/cm² in high-pressure emulsifier, the method is complicated for production. Furthermore, in the method of Japanese Unexamined Patent Publication No. Hei 9-316134, as described that the acrylic monomer with polar group in the molecule hinders the swelling of chlorinated polyolefin resin, and the like, there is a restrict in the use of acrylic monomer. Moreover, on the oil resistance required in the case of one-coat painting, further improvement has been searched.

The purpose of the invention is therefore to provide an aqueous dispersion having excellent adherence and appearance of coated film and yet giving a coated film with good oil resistance, in the use for paint, ink or adhesive for moldings or films of polyolefinic resin, method of producing the same and uses that use the same.

### Disclosure of the invention

As a result of diligent studies, the inventors have found that, with an aqueous dispersion containing a polymer obtainable by preparing raw material aqueous dispersion dispersedly containing carboxyl group-containing chlorinated polyolefin resin, and then polymerizing particular hydroxyl group-containing acrylic monomer and polymerizable monomer in the presence of anionic surfactant, the subject aforementioned can be accomplished.

Namely, it has been found that said aqueous dispersion has good preservative stability and gives a coated film with good adherence, oil resistance and appearance of coated film in the uses for paint resin to be used on painting polyolefinic resin moldings, for adhesive resin on adhering polypropylenic resin moldings to other substrates, and the like. Explanation will be made below in detail.

The carboxyl group-containing chlorinated polyolefin resin to be used in the invention can be obtained by dissolving polyolefin into solvents such as chloroform being inert to chlorine and blowing-in chlorine gas for chlorination. By graft copolymerizing α,β-unsaturated carboxylic acid or its anhydride before or after chlorination, the carboxyl group can be introduced.

Polyolefins include homopolymer of ethylene or propylene, or random copolymer or block copolymer of ethylene or propylene with other comonomer, for example, α-olefin comonomer with number of carbon atoms of 2 or more, preferably 2 to 6, such as butene-1, pentene-1, hexene-1, heptene-1 or octene-1. The random copolymer is more preferable than block copolymer. More-over, two or more kinds of comonomers may be copolymerized.

The carboxyl group-containing chlorinated polyolefin resin refers to a polyolefin modified through the graft reaction of said polyolefin with α,β-unsaturated carboxylic acid or its anhydride. As the α,β-unsaturated carboxylic acids or their anhydrides, for example, maleic acid, fumaric acid, itaconicacid, citraconic acid, allylsuccinic acid, mesaconic acid, aconitic acid, their acid anhydrides and the like can be mentioned. Besides, esters of these carboxylic acids are also mentioned. Thereamong, acid anhydrides are preferable. The graft copolymerization of polyolefin with α,β-unsaturated carboxylic acid monomer or its anhydride may be performed by the publicly known method. For example, it can be performed by the method of melting polyolefin to its melting point or higher under heat and graft copolymerizing in the presence of radical generator.

For the carboxyl group-containing chlorinated polyolefin resin, one with chlorine content of 15 to 35% by weight can be used. If under 15% by weight, then the melting point and melt viscosity are too high, hence aqueous dispersion cannot be made well. If over 35% by weight, then the adherence to substrate becomes poor. More preferable is 18 to 28% by weight. Besides, the chlorine content in the invention is a value measured based on JIS-K7229.

Moreover, the acid number of carboxyl group-containing chlorinated polyolefin resin is preferable to be 10 to 100. If under 10, then the emulsifiability is poor and, if exceeding 100, then the adhesiveness to polypropylene is aggravated. Besides, the acid value in the invention is a value measured based on JIS-K0070.

Moreover, the number average molecular weight of carboxyl group-containing chlorinated polyolefin resin is preferable to be 2000 to 40000. If under 2000, then the adherence to polyolefin resin is aggravated because of shortage of cohesion. If exceeding 40000, then the manipulability on dispersing into water is aggravated, which is unpreferable. Keeping of molecular weight within this range is possible by selecting the molecular weight of raw material and the conditions when conducting the graft reaction. Moreover, it is also possible by a method of once decreasing the molecular weight of raw material and then conducting the graft reaction. Besides, the number average molecular weight in the invention is a value measured by GPC (gel permeation chromatography, standard substance: polystyrene).

The raw material aqueous dispersion dispersedly containing carboxyl group-containing chlorinated polyolefin resin in the invention indicates one in the state of emulsion and can be obtained by the publicly known method (e.g. Yukagaku, Volume 17, page 133 (1968)). For example, the carboxyl group-containing chlorinated polyolefin resin is molten at about 100°C and nonionic surfactant and basic substance are added, which are molten and kneaded. In the molten state, water of 80 to 98°C is added to form an in-oil dispersion type (W/0 type) dispersion system. Successively, while adding water, this is subjected to phase inversion to an in-water dispersion type (O/W type) dispersion system. If need be, by adding additional quantity of water, the raw material aqueous dispersion of carboxyl group-containing chlorinated polyolefin resin can be obtained.

As the nonionic surfactants, polyoxyethylene alkyl ester, polyoxyethylene alkyl ether, polyoxyethylene alkylphenol ether, sorbitan alkyl ester, polyoxyalkylene alkyl ether, etc. can be used. These may be used solely or by mixing two or more kinds with different HLBs. Moreover, small quantity of anionic surfactant may be added in combination with major nonionic surfactant.

The quantity of nonionic surfactant is preferable to be 1 to30% by weight in terms of solids based on carboxyl group-containing chlorinated polyolefin resin and particularly 3 to 25% by weight are desirable. If under 1% by weight, then the stability of aqueous dispersion is aggravated and, if over 30% by weight, then the adherence of coated film and the water resistance are aggravated.

The reason why basic substance is added is because of neutralizing and ionizing the carboxyl group, thus making the dispersion into water good. If basic substance is not added, then dispersion with good stability cannot be obtained. As the basic substances, sodium hydroxide, potassium hydroxide, ammonia, methylamine, ethylamine, propylamine, butylamine, hexylamine, octylamine, ethanolamine, propanolamine, diethanolamine, N-methyldiethanolamine, dimethylamine, triethylamine, morpholine, etc. can be exemplified.

The quantity of basic substance is preferable to be 0.4 to 1.5 chemical equivalents based on carboxyl group of carboxyl group-containing chlorinated polyolefin resin. When using the quantity under 0.4 chemical equivalents or over 1.5 chemical equivalents, the stability of aqueous dispersion obtained is poor.

The concentration of the raw material aqueous dispersion dispersedly containing carboxyl group-containing chlorinated polyolefin resin in the invention may be selected appropriately, depending on the uses. Since too high or too low concentration of dispersion injures the coating workability, the concentration of resin solids is preferable to be 5 to 60 wt.%.

In the invention, hydroxyl group-containing acrylic monomer with ethylenic unsaturated bond in one molecule (hereinafter abbreviated as hydroxyl group-containing acrylic monomer) represented by a following general formula (1) is added to the raw material aqueous dispersion dispersedly containing carboxyl group-containing chlorinated polyolefin resin in the presence of anionic surfactant to polymerize onto said carboxyl group-containing chlorinated polyolefin resin. The reaction temperature at this time is preferable to be 60 to 90°C and the reaction time to be 1 to 6 hours. 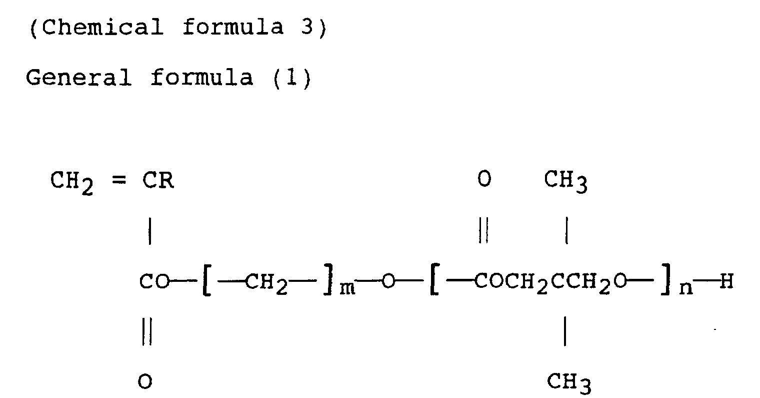 wherein R denotes H or CH₃, m denotes an integer of 1 to 4, and n denotes an integer of 0 to 3.

As the anionic surfactants to be used in the invention, alkyl sulfate, alkylphenol sulfate, alkylphenol sulfonate, phosphate, etc. can be exemplified. The quantity of anionic surfactant is preferable to be 1 to 30% by weight in terms of solids based on carboxyl group-containing chlorinated polyolefin resin and particularly 3 to 25% by weight are desirable. If under 1% by weight, then the stability of aqueous dispersion obtained is aggravated and, if over 30% by weight, then the adherence of coated film and the water resistance are aggravated.

Emulsion polymerization of hydroxyl group-containing acrylic monomer onto carboxyl group-containing chlorinated polyolefin resin is necessary and indispensable for the improvement in the reactivity of polymerizable monomer to be polymerized thereafter. Namely, it is considered that, by reacting hydroxyl group-containing acrylic monomer with carboxyl group-containing chlorinated polyolefin resin, the reacting points with polymerizable monomer increase, hence there is an effect of efficiently polymerizing polymerizable monomer onto carboxyl group-containing chlorinated polyolefin component. When not treating with hydroxyl group-containing acrylic monomer, or when using hydroxyl group-containing acrylic monomer other than said general formula (1), the polymerization of polymerizable monomer onto carboxyl group-containing chlorinated polyolefin resin does not go well, likely because of steric hindrance, resulting in the liability to the formation of homopolymer. For this reason, only such an emulsion that resembles to a system simply blended two kinds of different emulsions is obtained.

As the hydroxyl group-containing acrylic monomers, concretely, 2-hydroxyethyl acrylate, hydroxymethyl (meth)acrylate, hydroxyethyl (meth)acrylate, hydroxypropyl (meth)acrylate, hydroxybutyl (meth)acrylate, compounds named generically for dimethyltrimethylene carbonate-modified (meth)acrylate, etc. can be used. The compounds named generically for dimethyl-trimethylene carbonate-modified (meth)acrylate can be synthesized according to, for example, Japanese Unexamined Patent Publication No. Hei 7-126222.

In the invention, the content of hydroxyl group to be introduced by hydroxyl group-containing acrylic monomer is preferable to be 0.1 to 5% by weight in terms of solids in polymer. If under 0.1% by weight, then the polymerizable monomer to be polymerized thereafter does not polymerize and homopolymer is liable to be produced. Consequently, the emulsion becomes such a state that resembles to a simple blended system of carboxyl group-containing chlorinated polyolefin resin emulsion, acrylic emulsion, etc. For this reason, when painting onto polypropylene substrate and baking at 80°C, resins do not dissolve mutually on the substrate and chlorinated resin component that is weak substantially to oil component dissolves, leading to poor oil resistance. Also, if over 5% by weight, then there arise problems in the fluid property and preservative stability of aqueous dispersion obtained, in such ways that the gelation advances in micells and the like. Besides, the content of hydroxyl group in the invention is a value calculated based on JIS-K0070.

In the invention, the polymerizable monomer is added to the aqueous dispersion obtained by polymerizing hydroxyl group-containing acrylic monomer onto carboxy-l group-containing chlorinated polyolefin resin and the polymerization is started. For efficiently put forward the polymerization, as a polymerization initiator, it is preferable to use water-soluble polymerization initiator used on usual emulsion polymerization. For example, potassium persulfate, ammonium persulfate, etc. can be used. As the polymerization conditions, the reaction temperature on polymerization is preferable to be 60 to 90°C and the reaction time to be 1 to 6 hours, depending on the half-life period of polymerization initiator used. Moreover, for putting forward the polymerization rapidly, it is desirable to replace the atmosphere in polymerization system with inert gas such as nitrogen gas.

The polymerizable monomers to be used in the invention include, for example, acrylic monomers such as (meth)acrylic acid, methyl (meth)acrylate, ethyl (meth)acrylate, n-butyl (meth)acrylate, iso-butyl (meth)acrylate, 2-ethylhexyl (meth)-acrylate, lauryl (meth)acrylate, glycidyl (meth)acrylate and cyclohexyl (meth)acrylate, styrene, vinyl acetate, etc. These monomers can be used solely or by combining two or more kinds, respectively.

The proportion of carboxyl group-containing chlorinated polyolefin resin/hydroxyl group-containing acrylic monomer and polymerizable monomer in the invention is preferable to be 10-50/50-90 (ratio by weight of solids). If the quantity of carboxyl group-containing chlorinated polyolefin resin is less out of this range, then the adherence to polyolefin substrate is poor. While, if carboxyl group-containing chlorinated polyolefin resin is more out of this range, then the soluble component to oil component increases, posing the problems of poor oil resistance and the like.

Moreover, the glass transition temperature (Tg) of polymer obtained is preferable to be 10 to 80°C. If under 10°C, then the surface of coated film after one-coat painting is too soft, hence it becomes weak to oil component. If over 80°C, then the resin is too hard under the condition of coated film-drying temperature of 80°C being the mainstream currently, hence not only the adherence is poor, but also film is not formed, as the case may be, which is unpreferable.

The aqueous dispersion obtained in this way has excellent adherence to polyolefinic resins, in particular, polypropylene, the oil resistance of coated film is also good and yet the particle diameter is fine, and the stability is also good.

The aqueous dispersion of the invention can be used even as it is for paint resin, ink resin and adhesive resin. Moreover, within a range not hindering the effect of the invention, commonly used various additives can also be added in the respective uses. For example, it may be used by mixing with pigment, or other aqueous resin may be blended. As the other aqueous resins, urethane resin, acrylic resin, chlorinated resin, etc. can be mentioned.

The feature of the invention lies in that, after hydroxyl group-containing acrylic monomer was once reacted with carboxyl group-containing chlorinated polyolefin resin in aqueous dispersion, polymerizable monomer is polymerized thereby the reactivity between carboxyl group-containing chlorinated polyolefin resin poor substantially in the reactivity and polymerizable monomer improves. Furthermore, it lies in that the aqueous dispersion has good preservative stability and gives a coated film with good adherence, oil resistance and appearance of coated film in the uses for one-coat paint and primer to be used on painting onto polyolefinic resin moldings, and in the uses for adhesive and primer on adhering polypropylenic resin moldings to other substrates.

### Best embodiment to put the invention into practice

In following, the invention will be illustrated concretely based on examples, but the invention is not confined thereto.

### [Producing example 1]

In a three-neck flask equipped with stirrer, dropping funnel and condenser for refluxing monomer were placed 500g of iso-tactic polypropylene with number average molecular weight of 30000, which was molten completely in an oil bath kept constantly at 180°C. After nitrogen replacement in flask was performed for about 10 minutes, while stirring, 20g of maleic anhydride were put-in over about 5 minutes. Next, a solution of 2g of di-t-butyl peroxide dissolved into 10ml of heptane was put-in from dropping funnel over about 30 minutes. At this time, the inside of system was kept at 180°C. After the reaction was continued further for 1 hour, while reducing the pressure in flask with aspirator, unreacted maleic anhydride was removed over about 30minutes. Next, about 300g of this product were put in a reactor and 5 liters of chloroform were added to dissolve sufficiently under pressure of 2kg/cm². Then, while irradiating ultraviolet rays, gaseous chlorine was blown-in from the bottom of reactor so as the chlorine content to become 22% by weight. After completion of the reaction, chloroform being solvent was distilled off by using twin screw extruder to obtain a solid article of carboxyl group-containing chlorinated polypropylene. The acid number of this product was 26, the melting point was 90°C, and the number average molecular weight was 28000.

### [Producing example 2]

Using 500g of ethylene-propylene copolymer with number average molecular weight of 30000 and ethylene content of 6.1mol%, 33g of maleic anhydride and a solution of 3.3g of di-t-butyl peroxide dissolved into 10ml of heptane were put-in similarly to Producing example 1. Also similarly to Producing example 1 thereafter, a solid article of carboxyl group-containing chlorinated polypropylene with chlorine content of 18% by weight was obtained. The acid number of this product was 62, the melting point was 72°C, and the number average molecular weight was 22000.

### [Example 1]

In a flask equipped with stirrer were taken 100g of carboxyl group-containing chlorinated polyolefin obtained in Producing example 1, which was molten at 100°C under heat. Thereafter, 20g of nonionic surfactant (from Kao Corp., Emulgen 920) were added and stirred well, and 1.5g of morpholine were added. Keeping the temperature at 100°C and, while stirring strongly, water of 90°C was added little by little. The viscosity increased, but, when continuing to add water as it is, the viscosity decreased. After 200g of water were added, a milky white emulsion was obtained. Here, water was added further to adjust 30 wt.% concentration, which was made a raw material dispersion.

Next, after temperature was raised to 75°C, 5.4g of 2-hydroxyethyl acrylate (hereinafter abbreviated as 2-HEA), 365g of water and 9.0g of anionic surfactant (from Kao Corp., Emul NC) were added to 150g of the raw material dispersion. After stirring for 1 hour, 0.9g of polymerization initiator (ammonium persulfate), 68g of cyclohexyl methacrylate (hereinafter abbreviated as CHMA) and 68g of isobutyl methacrylate (hereinafter abbreviated as i-BMA) were added over 1 hour and the reaction was conducted for 3 hours at 75 °C. Thereafter, the reaction liquor was cooled to obtain an aqueous dispersion. The physical properties of the aqueous dispersion thus obtained are shown in Table 1.

### [Example 2]

Except that dimethyltrimethylene carbonate (monomer)-modified ethyl methacrylate (from Daicel Chemical Industries, Ltd., HEMAC) was used in place of 2-HEA in Example 1, similarly an aqueous dispersion was obtained. The physical properties of the aqueous dispersion obtained are shown in Table 1.

### [Example 3]

Except that the addition levels were varied to 4g of 2-HEA, 180g of water, 25g of CHMA and 24g of i-BMA in Example 1, similarly an aqueous dispersion was obtained. The physical properties of the aqueous dispersion obtained are shown in Table 1.

### [Example 4]

Except that 100g of carboxyl group-containing chlorinated polyolefin obtained in Producing example 2 were used in Example 3, similarly an aqueous dispersion was obtained. The physical properties of the aqueous dispersion obtained are shown in Table 1.

### [Comparative example 1]

According to Example 1 of Japanese Unexamined Patent Publication No. Hei 9-316134, an aqueous resin composition was produced. Namely, in a 1-liter flask equipped with condenser, thermometer, stirrer and dropping apparatus of polymerizable monomer were charged 233g of raw material dispersion (30 wt.% concentration) prepared similarly to Example 1 and 410g of distilled water and then the inside of flask was replaced with nitrogen. Then, while keeping the temperature of content in flask at 65°C, under stirring, a mixture of monomers consisting of 95g of i-BMA, 52g of CHMA, 42g of cyclohexyl acrylate and 21gof styrene was added dropwise over 1 hour and thereafter the overall mixture was continued to stir further for 1 hour at the same temperature. To the aqueous dispersion obtained were added5g of reactive emulsifier (from Kao Corp., Latemul S-180A) and 30g of aqueous solution containing 1g of polymerization initiator (ammonium persulfate), and, after the inner temperature of flask was raised to 77°C, polymerization of monomer mixture was started. After the heat generation accompanied with reaction came to an end, the polymerization reaction was conducted by keeping further for 60 minutes at the same temperature, and by keeping further for 1.5 hours at 90°C. Thereafter, by cooling, an aqueous resin composition was obtained. The physical properties of the aqueous dispersion obtained are shown in Table 1.

### [Comparative example 2]

Except that 2-HEA was not added, and the addition levels of CHMA and i-BMA were made to be 70.7g, respectively, in Example 1, similarly an aqueous dispersion was obtained. The physical properties of the aqueous dispersion obtained are shown in Table 1.

### [Comparative example 3]

Except that 2-HEA was made to be 25.5g, CHMA to be 323g and i-BMA to be 323g in Example 1, similarly an aqueous dispersion was obtained. The physical properties of the aqueous dispersion obtained are shown in Table 1.

### [Comparative example 4]

Except that 1g of 2-HEA, 12.7g of CHMA and 12.7g of i-BMA were added to 450g of 30 wt.% raw material dispersion in Example 1, similar manipulation was made, but the viscosity ended to increase up to the state wherein the aqueous dispersion showed no fluidity, hence the aqueous dispersion cannot be obtained.

### [Comparative example 5]

In Example 1, nonionic surfactant (from Kao Corp. , Emulgen 920) was used in place of anionic surfactant to be used on adding hydroxyl group-containing monomer. At this time, however, the aqueous dispersion ended to separate, hence the aqueous dispersion cannot be obtained.

### (Table 1)

**Table 1**

| | Solids^{*1} (wt.%) | Ratio of components^{*2} | Tg^{*3} (°C) | Content of hydroxyl group (wt. %) |
|---|---|---|---|---|
| Example 1 | 31.0 | 20/80 | ca. 50 | 0.42 |
| Example 2 | 30.7 | 20/80 | ca. 50 | 0.14 |
| Example 3 | 30.9 | 40/60 | ca. 45 | 0.31 |
| Example 4 | 31.0 | 40/60 | ca. 45 | 0.31 |
| Comparative example 1 | 30.0 | 25/75 | ca. 50 | 0 |
| Comparative example 2 | 30.1 | 20/80 | ca. 50 | 0 |
| Comparative Example 3 | 30.5 | 5/95 | ca. 51 | 1.98 |

| | | | | |
|---|---|---|---|---|
| Solids^{*1} : Solid concentration of aqueous dispersion obtained. | | | | |
| Ratio of components^{*2} : Carboxyl group-containing chlorinated polyolefin resin / hydroxyl group-containing acrylic monomer + polymerizable monomer (ratio by weight). | | | | |
| Tg^{*3} : Glass transition temperature of polymer. | | | | |

### [Test example 1]

Water was added to the aqueous dispersions obtained in Examples 1 through 4 and Comparative examples 1 through 3 to adjust to 30% concentration. These were preserved for 1 month at 50°C and the preservative stability was evaluated by following tests. Results are shown in Table 2.
· Appearance: Judged visually. In the table, ○ was marked in the case of no change in appearance.
· Average particle diameter: Measured with Zeta Sizer (measuring range 1µm or lower, from MARVARON).

### (Table 2)

**Table 2**

| Results of preservative stability | | | | |
|---|---|---|---|---|
| | Immediately after production | | After 1 month at 50°C | |
| | Appearance | Average particlediameter (µm) | Appearance | Average particlediameter (µm) |
| Example 1 | ○ | 0.15 | ○ | 0.15 |
| Example 2 | ○ | 0.17 | ○ | 0.18 |
| Example 3 | ○ | 0.17 | ○ | 0.17 |
| Example 4 | ○ | 0.16 | ○ | 0.17 |
| Comparative example 1 | ○ | 0.16 | ○ | 0.45 |
| Comparative example 2 | ○ | 0.15 | ○ | 0.20 |
| Comparative example 3 | ○ | 0.17 | ○ | 0.25 |

Even with Comparative examples 1 through 3, there is no difference in appearance, but it can be seen that, through long term preservation at high temperature, the average particle diameter changes significantly. If the average particle diameter changes, then grains generate, which is unpreferable in the point of decreased paintability.

### [Test example 2]

Fluids obtained by filtering the aqueous dispersions of Examples 1 through 4 and Comparative examples 1 through 3 were spray painted onto a polypropylene resin plate. Thereafter, it was allowed to stand for 10 minutes at room temperature and dried for 30 minutes at 80°C using fan dryer (film thickness after drying; 20 to 30µm). After the painted plate obtained was allowed to stand for 1 day at room temperature, following tests of coated film were performed. Results are shown in Table 3.

### · Adherence

Slits reaching the base were made on the surface of coated film with cutter to make 100 crosscuts at intervals of 2mm. Cellophane adhesive tape was stuck closely thereon and peeled off in the direction of 180 degrees to count the number of remaining crosscuts. In the table, ○ was marked if the number of unpeeled crosscuts was 100, and × was marked if 99 or less.

### · Oil resistance

Engine oil resistance: Commercial engine oil (from EXXON Mobile Corp., Mobil super SJ Low-40) was coated uniformly on the surface of coated film with brush and dried for 2 hours at 80°C. The state of the surface of coated film after drying was identified. In the table, ○ was marked if no change was seen, and × was marked if coated film swelled to cause blisters.

Beef tallow resistance: Commercial beef tallow (from Wako Pure Chemical Industries, Ltd., Beef tallow) was coated on the surface of coated film and dried for 2 hours at 80°C. The state of the surface of coated film after drying was identified. In the table, ○ was marked if no change was seen, and × was marked if coated film swelled to cause blisters.

### (Table 3)

**Table 3**

| Results of one-coat test | | | |
|---|---|---|---|
| Composition | Physical properties of coated film | | |
| | Adherence | Engine oil resistance | Beef tallow resistance |
| Example 1 | ○ | ○ | ○ |
| Example 2 | ○ | ○ | ○ |
| Example 3 | ○ | ○ | ○ |
| Example 4 | ○ | ○ | ○ |
| Comparative example 1 | ○ | × | × |
| Comparative example 2 | × | ― | ― |
| Comparative example 3 | × | ― | ― |

Besides, with Comparative examples 2 and 3, the evaluation of oil resistances was impossible.

### Utilizability in the industry

In accordance with the invention, an aqueous dispersion having excellent preservative stability, adherence and appearance of coated film and yet giving a coated film with good oil resistance for moldings or films of polyolefinic resin, as a resin for paint, ink or adhesive, can be obtained.

Furthermore, since aromatic solvents such as toluene are not used at all in the invention, there are quite no problems in the aspects of safety and hygiene and environmental pollution, hence it is useful in the industry.

## Claims

1. An aqueous dispersion **characterized by** containing a polymer obtainable by polymerizing hydroxyl group-containing acrylic monomer with ethylenic unsaturated bond in one molecule represented by a following general formula (1) and polymerizable monomer with raw material aqueous dispersion dispersedly containing carboxyl group-containing chlorinated polyolefin resin with chlorine content of 15 to 35% by weight, in the presence of anionic surfactant. 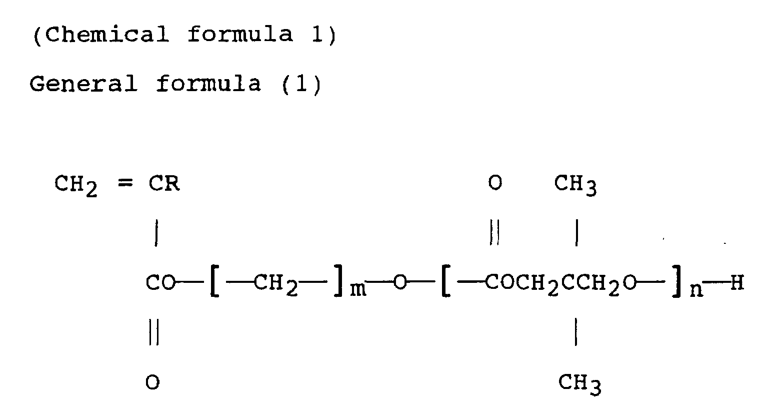 wherein R denotes H or CH₃, m denotes an integer of 1 to 4, and n denotes an integer of 0 to 3.
wherein R denotes H or CH₃, m denotes an integer of 1 to 4, and n denotes an integer of 0 to 3.

2. The aqueous dispersion of Claim 1, wherein carboxyl group-containing chlorinated polyolefin resin to hydroxyl group-containing acrylic monomer and polymerizable monomer is 10∼50/90∼50 (ratio by weight of solids).

3. The aqueous dispersion of Claim 1 or 2, wherein the content of hydroxyl group in said polymer is 0.1 to 5% by weight.

4. The aqueous dispersion of any of Claims 1 through 3, wherein the acid number of carboxyl group-containing chlorinated polyolefin resin is 10 to 100.

5. The aqueous dispersion of any of Claims 1 through 4, wherein the number average molecular weight of carboxyl group-containing chlorinated polyolefin resin is 2000 to 40000.

6. A method of producing aqueous, dispersion **characterized by** polymerizing hydroxyl group-containing acrylic monomer with ethylenic unsaturated bond in one molecule represented by a following general formula (1) with raw material aqueous dispersion dispersedly containing carboxyl group-containing chlorinated polyolefin resin with chlorine content of 15 to 35% by weight in the presence of anionic surfactant, and then further polymerizing polymerizable monomer. 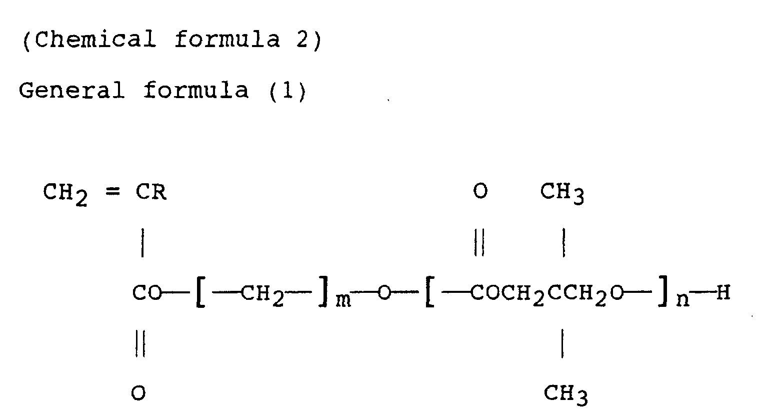 wherein R denotes H or CH₃, m denotes an integer of 1 to 4, and n denotes an integer of 0 to 3.

7. A paint resin for the polyolefin resin substrates, using the aqueous dispersion of any of Claims 1 through 5.

8. An ink resin for the polyolefin resin substrates, using the aqueous dispersion of any of Claims 1 through 5.

9. An adhesive resin for the polyolefin resin substrates, using the aqueous dispersion of any of Claims 1 through 5.
